# EUROPEAN PATENT APPLICATION

(11) **EP 1 909 417 A2**
(43) Date of publication of application: **09.04.2008**
(21) Application number: 07107396.9
(22) Date of filing: 03.05.2007
(51) Int. Cl.: H04H 60/25

(54) **Method and apparatus for automatically updating data broadcasting**

(30) Priority: 04.10.2006 KR 20060097554
(71) Applicant: Samsung Electronics Co., Ltd., Suwon-si, Gyeonggi-Do (KR)
(72) Inventor: Ohn, Seung-hoon, Dongjak-gu, Seoul (KR); Kim, Hyoung-il, Bundang-gu, Seongnam-si, Gyeonggi-do (KR)
(74) Representative: Grünecker, Kinkeldey, Stockmair & Schwanhäusser Anwaltssozietät

(57) **Abstract**

A method and apparatus are provided for automatically updating data broadcasting through a broadcasting terminal, while audio/video (A/V) broadcasting is being watched. The method includes: comparing a predetermined update period of the data broadcasting with an elapsed time; if the elapsed time is greater than the update period, and if a main/sub channel of AN broadcasting currently being watched by a user is different from a predetermined channel, changing the main/sub channel of A/V broadcasting into the predetermined main/sub channel; processing the predetermined data broadcasting signal; and providing the data broadcasting signal to a user. The method and apparatus can be used without additional key input by a user, reducing , traffic accidents caused by distraction of the user in the process of key input for watching digital broadcasting.

## Description

### CROSS-REFERENCE TO RELATED APPLICATIONS

This application claims the benefit of Korean Application No. 10-2006-97554, filed October 4, 2006, in the Korean Intellectual Property Office, the disclosure of which is incorporated herein by reference.

### BACKGROUND OF THE INVENTION

### 1. Field of the Invention

Aspects of the present invention relate to digital multimedia broadcasting (DMB), and more particularly, to a method and apparatus for automatically updating data broadcasting while audio/video broadcasting is being watched via DMB terminals, according to a user's choice.

### 2. Description of the Art

Digital multimedia broadcasting (DMB) provides CD-level sound quality, and video and data services via mobile handsets, even while their holders move. allowing users mobility or to remain stationary. DMB is classified into terrestrial DMB and satellite DMB according to transmission route. DMB includes audio, video, and data broadcasting. Audio and video broadcasting provide programs in the same manner as conventional radio and television broadcasting. On the other hand, data broadcasting provides users with live information (e.g., traffic/destination information) in text, video, or audio format.

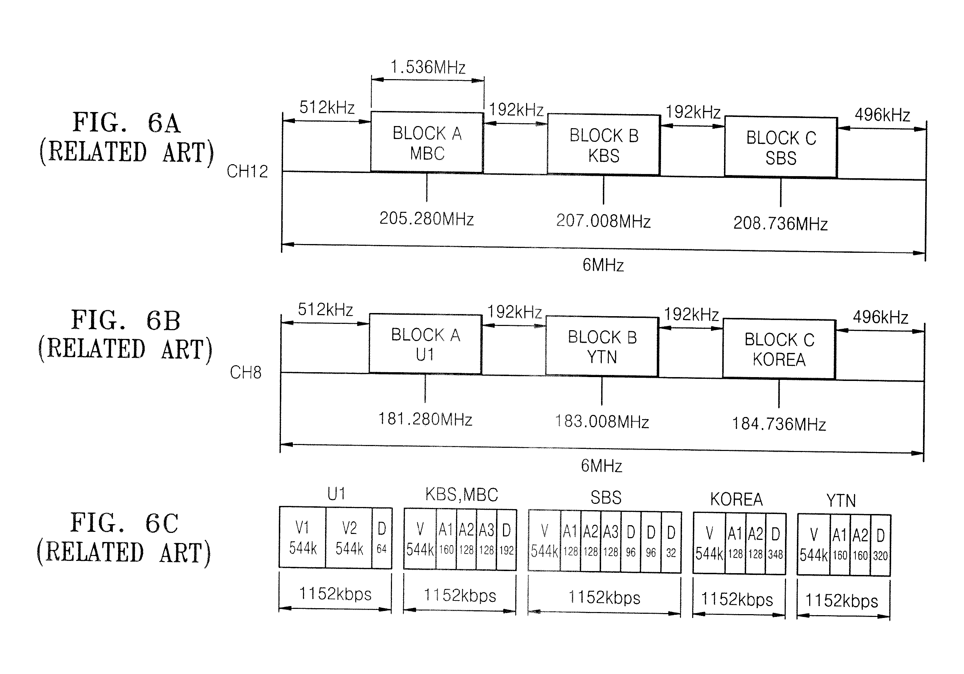

FIGS. 6A through 6C illustrate a frequency band allocated to a Korean DMB service. Sub-channels (MBC, KBS, and SBS) constituting a main channel CH12 are shown in FIG. 6A. Sub-channels (U1, YTN, and Korea) constituting a main channel CH8 are shown in FIG. 6B. Each sub-channel has a unique center frequency and predetermined channel width. For example, the sub-channel KBS (the second sub-channel shown in FIG. 6A) has a center frequency of 207.008MHz and a channel width of 1.536MHz. Furthermore, each sub-channel includes a plurality of ensemble channels. For example, the sub-channel KBS (the second sub-channel shown in FIG. 6C) includes five ensemble channels (i.e., one video broadcasting channel, three audio broadcasting channels, and one data broadcasting channel).

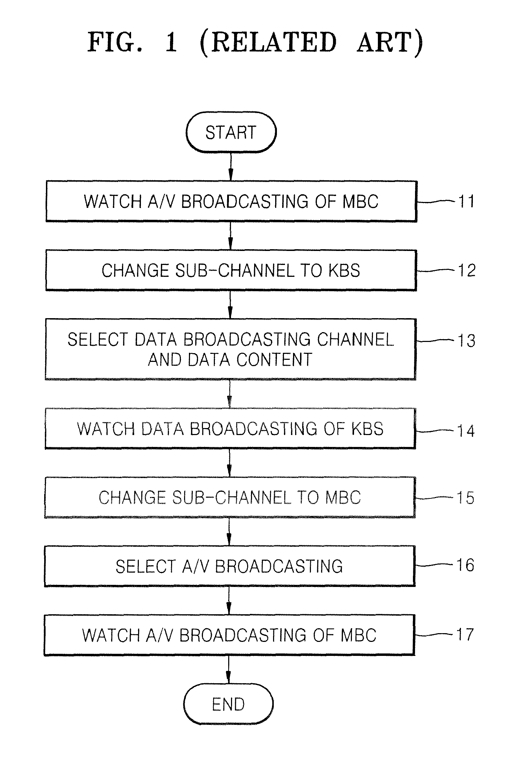

Generally, a DMB terminal has only one channel source. Thus, the DMB terminal can receive only broadcast signals included in one sub-channel at a time. For example, when a radio frequency (RF) module of the DMB terminal is tuned to the sub-channel MBC (the first sub-channel shown in FIG. 6A), broadcast signals of all ensemble channels included in the sub-channel MBC are received through the RF module, while broadcast signals of sub-channel KBS are filtered and removed. Thus, if the user intends to watch data broadcasting provided through sub-channel MBC while watching audio/video (A/V) broadcasting provided through sub-channel MBC, the data broadcasting can be watched through logical signal processing without having to change the current sub-channel to another sub-channel. However, if the user intends to watch data broadcasting provided through sub-channel KBS while watching A/V broadcasting provided through sub-channel MBC, as illustrated in FIG. 1, in order to enable the user to watch the data broadcasting provided through the sub-channel KBS, the keys (or buttons) of the DMB terminal have to be operated several times. That is, the data broadcasting of KBS can be viewed only when the user changes the current sub-channel MBC into the sub-channel KBS by operating the keys several times (operations 12, 13, and 14). In addition, if the user intends to again watch the A/V broadcasting of MBC, which was being previously watched, operations 15 and 16, which are reverse to operations 12 and 13, have to be repeated. The above descriptions also apply without alteration when the user intends to watch data broadcasting (e.g., data broadcasting of YTN) provided through a main channel (e.g., CH8) while watching A/V broadcasting (e.g., A/V broadcasting of MBC) provided through another main channel (e.g., CH12).

Accordingly, in order for the user to watch data broadcasting while watching A/V broadcasting through the conventional DMB terminal, the user has to operate the keys several times, resulting in inconvenience in use and unnecessary time consumption. In addition, a traffic accident may occur when the user operates the keys while driving.

### SUMMARY OF THE INVENTION

Aspects of the present invention provide a method and apparatus for automatically updating data broadcast received by a digital multimedia broadcasting (DMB) terminal so as to avoid inconvenience experienced in the conventional method.

Additional aspects and/or advantages of the invention will be set forth in part in the description which follows and, in part, will be obvious from the description, or may be learned by practice of the invention.

According to an aspect of the present invention, there is provided an apparatus for automatically updating data broadcasting while reproducing audio/video (A/V) broadcasting and data broadcasting, the apparatus comprising: a storage unit that stores updated information for the data broadcasting, which is predetermined by a user; a radio frequency (RF) module that separates a data broadcasting signal predetermined by the user from broadcasting signals; a data broadcasting signal decoder that decodes the data broadcasting signal separated by the RF module; and a controller that uses the updated information for the data broadcasting stored in the storage unit to determine if the data broadcasting needs to be updated, and that periodically updates data broadcasting by controlling the data broadcasting signal decoder.

According to another aspect of the present invention, there is provided a method of automatically updating data broadcasting while watching A/V broadcasting through a broadcasting terminal, the method comprising: comparing a predetermined update period of the data broadcasting with an elapsed time; processing a predetermined data broadcasting signal if the elapsed time is greater than the update period; and providing broadcasting to a user by using the processed data broadcasting signal.

According to another aspect of the present invention, there is provided a method of automatically updating data broadcasting while watching A/V broadcasting through a broadcasting terminal, the method comprising: comparing a predetermined update period of the data broadcasting with an elapsed time; if the elapsed time is greater than the update period, and if a main/sub channel of A/V broadcasting currently being watched by a user is different from a predetermined main/sub channel, changing the main/sub channel of A/V broadcasting into the predetermined main/sub channel; processing the predetermined data broadcasting signal; and providing broadcasting to the user by using the processed data broadcast signal.

According to another aspect of the present invention, there is provided a computer-readable medium having embodied thereon a computer program for executing a method of automatically updating data broadcasting while watching A/V broadcasting through a broadcasting terminal, the method comprising: comparing a predetermined update period of the data broadcasting with an elapsed time; processing a predetermined data broadcasting signal if the elapsed time is greater than the update period; and providing broadcasting to a user by using the processed data broadcasting signal.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a flowchart illustrating a conventional method of updating data broadcasting;
FIG. 2 is a block diagram of an apparatus for automatically updating data broadcasting according to an embodiment of the present invention;
FIG. 3 is a flowchart illustrating a method of automatically updating data broadcasting according to an embodiment of the present invention;
FIG. 4 is a flowchart illustrating a method of automatically updating data broadcasting according to another embodiment of the present invention;
FiGS. 5 A through E illustrate examples of a screen of a digital multimedia broadcasting (DMB) terminal employing a method of updating data broadcasting according to an embodiment of the present invention;
FIGS. 6A through 6C illustrate a frequency band allocated to a Korean DMB service; and
FlG. 7 illustrates an example of a setting screen through which data broadcasting is automatically updated according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

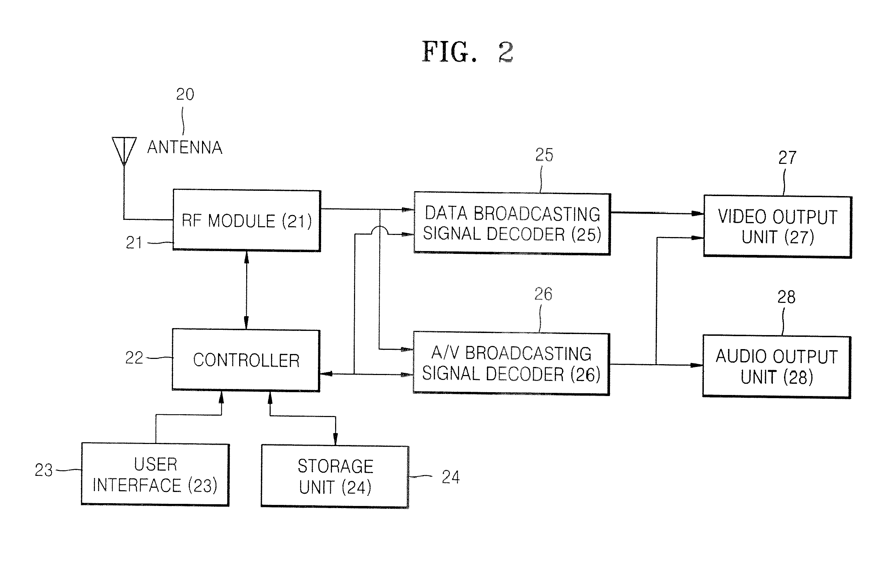

FIG. 2 is a block diagram of an apparatus for automatically updating data broadcasting according to an embodiment of the present invention.

Digital multimedia broadcasting (DMB) signals are received through an antenna 20. The received signals are filtered by a radio frequency (RF) module 21 so that only a DMB signal for a desired main/sub channel remains. Then, the RF module 21 separates only a signal for a desired ensemble channel from the filtered DMB signal, that is, an audio/video (A/V) broadcasting signal or a data broadcasting signal.

A user may predetermine or change update information for data broadcasting, through a user interface 23. Further, the user may delay or cancel an update process for data broadcasting.

The update information for data broadcasting is input by the user via the user interface 23 and is stored in a storage unit 24.

A data broadcasting signal decoder 25 (e.g., a transport protocol experts group (TPEG) decoder) decodes the data broadcasting signal separated by the RF module 21 and then outputs the decoded result to an audio output unit 28 or a video output unit 27.

An A/V broadcasting signal decoder 26 decodes the A/V broadcasting signal separated by the RF module 21 and then outputs the decoded result to the video output unit 27 and/or the audio output unit 28.

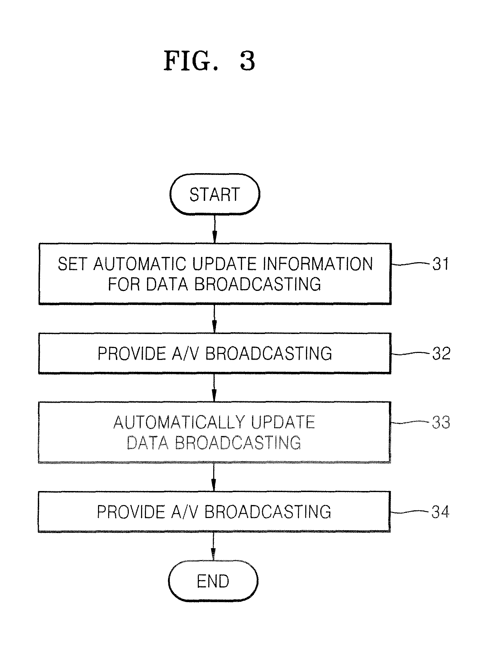

FIG. 3 is a flowchart illustrating a method of automatically updating data broadcasting according to an embodiment of the present invention.

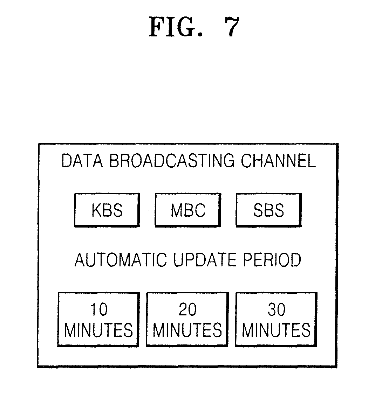

In operation 31, the user sets automatic update information for data broadcasting. Using an input button or key of a DMB terminal, the user enables an automatic update function for data broadcasting and sets or changes information about the data to be updated such as a main channel, a sub-channel , an ensemble channel, data content (e.g., traffic condition, traffic accident information, destination information, weather information, etc.), and a data update period. The data update period is referred to as a temporal interval between two consecutive updating operations when data broadcasting is repeatedly updated. The data update period may vary depending on a user's choice, and may be set to 10 minutes, 20 minutes, 30 minutes, or 1 hour. For example, when data broadcasting conforms to a TPEG protocol, a data provider provides new data every 10 minutes. Thus, the data update period may be set to 10 minutes or more. FIG. 7 illustrates an example of a setting screen through which data broadcasting is automatically updated according to an embodiment of the present invention.

In operation 32, the DMB terminal provides A/V broadcasting. A/V broadcasting selected by the user is provided through the output units 27 and 28 of the DMB terminal.

According to another embodiment of the present invention, operations 31 and 32 may be performed in reverse order. That is, the user may first watch A/V broadcasting (operation 32), and then may temporarily stop watching the AN broadcasting so as to set automatic update information for data broadcasting (operation 31).

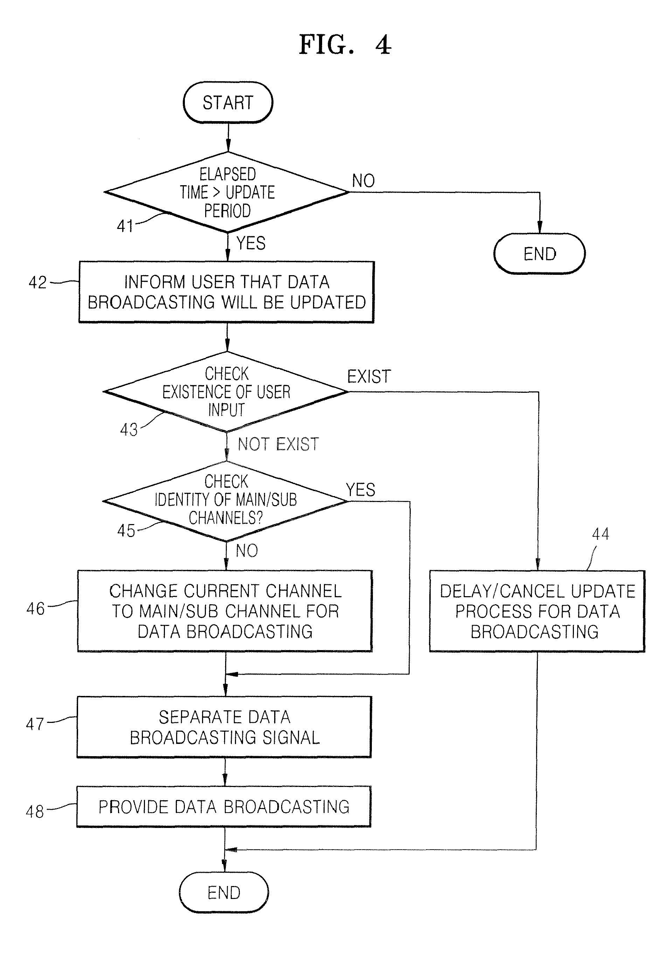

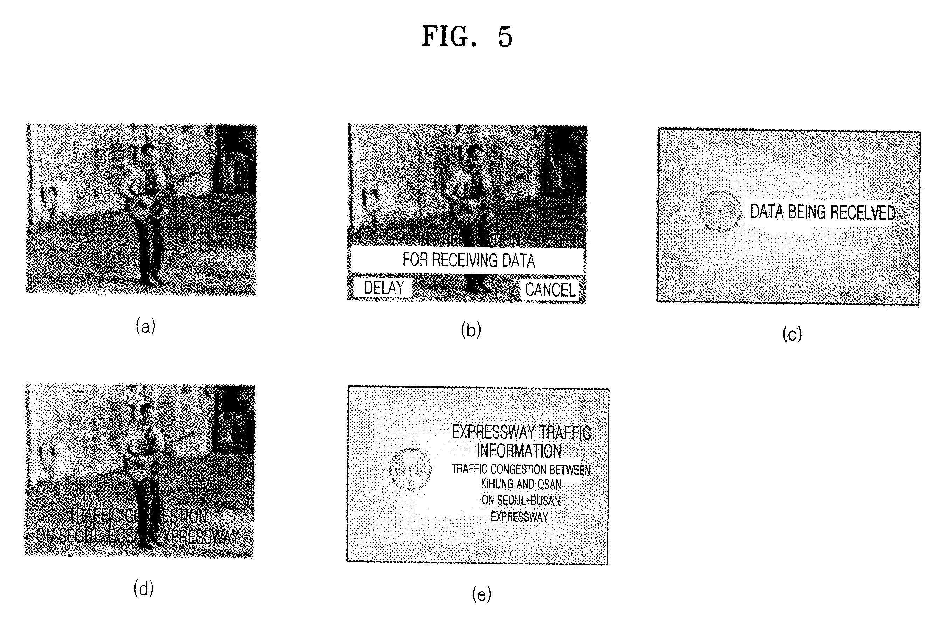

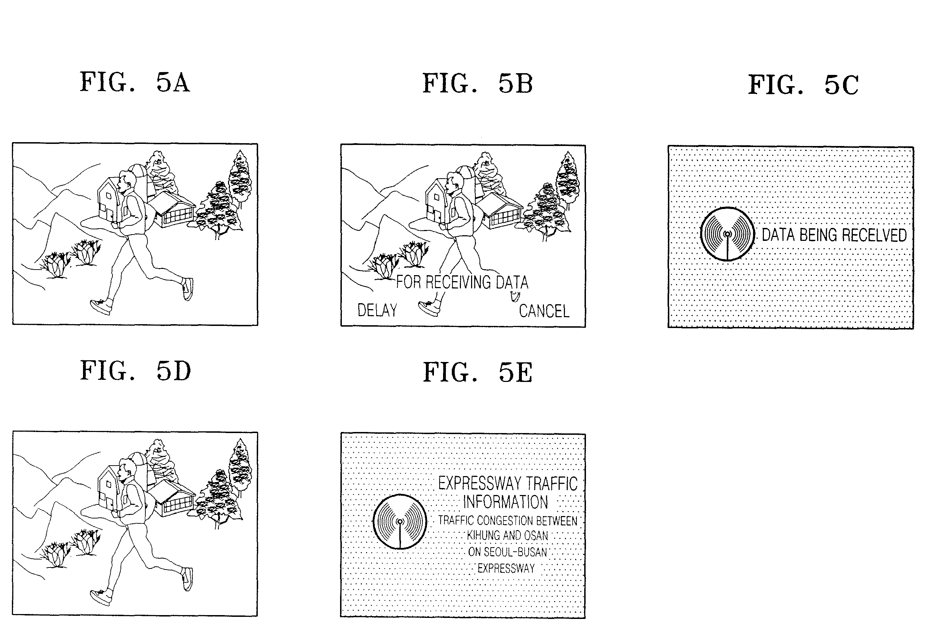

In operation 33, the data broadcasting is automatically updated. In this operation, an elapsed time after the data broadcasting was last updated is compared with an update period, so that the apparatus can automatically update the data broadcasting when the elapsed time is greater than an update period (see FIG. 5B and C). Details of operation 33 will be described below with reference to FIG. 4.

In operation 34, the DMB terminal resumes the A/V broadcasting initially watched by the user. That is, the DMB terminal terminates the update process for data broadcasting (operation 33), and continues the A/V broadcasting initially watched by the user in operation 32.

FIG. 4 is a flowchart illustrating a method of automatically updating data broadcasting according to another embodiment of the present invention. In particular, FIG. 4 illustrates details of operation 33 for automatically updating data broadcasting illustrated in FIG. 3.

In operation 41, the controller 22 computes an elapsed time since data broadcasting was last updated and then compares the elapsed time with a predetermined update period stored in the storage unit 24. If the elapsed time is greater than the update period, data broadcasting starts to be updated. Otherwise, operation 41 is repeated after a predetermined time.

In operation 42, as shown in FIG. 5B, the video output unit 27 informs the user that the data broadcasting will be updated, and displays a message that inquires of the user whether to delay or cancel the update process. The user can select whether to delay or cancel the update process through the user interface 23 in response to the inquiry.

In operation 43, the controller determines whether the user inputs his selection (delay or cancel) through the user interface 23.

In operation 44, if the user has selected to delay or cancel the update process, the controller 22 terminates the update process for data broadcasting. If the user selects to delay the update process, the update process for data broadcasting is postponed until a next update period begins. If the user selects to cancel the update process, the update process for data broadcasting is not performed until A/V broadcasting currently being watched by the user is ended, or the DMB terminal is turned off by the user.

According to another embodiment of the present invention, operations 42, 43, and 44 may be skipped. That is, the update process of data broadcasting is periodically repeated without asking a user whether the update process of data broadcasting is to be performed.

In operation 45, the controller 22 determines whether a main/sub channel through which the AN broadcast currently being watched by the user is the same as a main/sub channel through which data for updating data broadcasting is provided. If the main and sub channels are determined to be different from each other, operation 46 is performed. Otherwise, operation 46 is skipped, and operation 47 is performed.

In operation 46, the RF module 21 changes a current channel to a main/sub channel for the data broadcasting and then receives a DMB signal provided through the main/sub channel.

In operation 47, the RF module 21 filters the received DMB signal so as to separate a signal provided through the main/sub channel that includes a data broadcasting signal. Since signals for a plurality of ensemble channels are multiplexed in one the RF module 21 uses header information contained in the DMB signal so that only a data broadcasting signal corresponding to one of the ensemble channels is de-multiplexed to be separated.

In operation 48, the separated data broadcasting signal is decoded by the data broadcasting signal decoder 25 and is then displayed through the video output unit 27 and/or the audio output unit 28. Specifically, only data content (e.g., traffic conditions) of the separated data broadcasting signal that is desired by a user is displayed through the output units 27 and/or 28.

In operation 48, two methods are used to display data for updating data broadcasting, through output units 27 and/or 28.

A first method is defined as a method of outputting only data broadcasting, through output units 27 and/or 28, for example, as shown in FIG. 5E (operation 48 is first performed, followed by operation 34).

A second method is defined as a method of outputting data broadcasting together with A/V broadcasting currently being watched by the user, for example, as shown in FIG. 5D (operations 34 and 48 are simultaneously performed). When the data broadcasting is attempted to be output together with the AN broadcasting according to the second method in a case where a main/sub channel for the A/V broadcasting currently being watched by the user is different from a main/sub channel of the data broadcasting, then a broadcasting signal provided through the main/sub channel for the data broadcasting is to be first downloaded and saved. This is because the DMB terminal having one channel source as described above can receive only a broadcasting signal provided through one main/sub channel at one time.

FIGS. 5A through 5E illustrate examples of a screen of a DMB terminal employing a method of updating data broadcasting according to an embodiment of the present invention.

A screen shown in FIG. 5A illustrates A/V broadcasting currently being watched by the user. A screen shown in FIG. 5B informs a user who is watching the A/V broadcasting that an update process for data broadcasting will be performed. In addition, this screen also inquires of the user whether to delay or cancel the update process. When the user selects to delay or cancel the update process, the update process for data broadcasting is terminated, and the screen shown in FIG. 5A is displayed again. On the other hand, if there is no input from the user for a predetermined time, the update process for data broadcasting begins and a screen shown in FIG. 5C is displayed.

Hereinbefore, exemplary embodiments of the present invention have been described focusing on the DMB terminal. However, embodiments of the present invention are not limited to the DMB terminal, and it can be easily construed that another broadcasting terminal capable of transmitting AN broadcasting together with data broadcasting is also included in the invention.

According to an example embodiment of the present invention, data broadcasting can be automatically received while watching AN broadcasting through a broadcasting terminal without an additional key input, thereby allowing a user to watch the data broadcasting conveniently. In addition, when the user watches digital multimedia broadcasting (DMB) while driving a car, traffic accidents caused by distraction of the user in the process of key input for watching digital broadcasting can be avoided. In addition, the user is asked in advance whether data broadcasting will be updated or not, and thus selection can be made according to the user's choice. Alternatively, the user may opt to have data broadcasting updated, but not displayed through the output units.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

Although a few embodiments of the present invention have been shown and described, it would be appreciated by those skilled in the art that changes may be made in this embodiments without departing from the principles and spirit of the invention, the scope of which is defined in the claims and their equivalents.

## Claims

1. An apparatus for automatically updating data broadcasting , the apparatus comprising:
a storage unit that stores update information for the data broadcasting, which is predetermined by a user;
a radio frequency (RF) module that separates the data broadcasting signal predetermined by the user from broadcasting signals;
a data broadcasting signal decoder that decodes the data broadcasting signal separated by the RF module; and
a controller that uses the update information for the data broadcasting stored in the storage unit to determine if the data broadcasting needs to be updated and that periodically updates the data broadcasting by controlling the data broadcasting signal decoder.

2. The apparatus of claim 1, further an output unit, wherein the data broadcasting signal is downloaded in advance and stored in the storage unit, and thereafter the data broadcasting is output together with the audio/video (A/V) broadcasting through the output unit.

3. The apparatus of claim 2, wherein the output unit outputs an audio/video (AN) broadcasting signal decoded by an AN broadcasting signal decoder and a data broadcasting signal decoded by the data broadcasting signal decoder.

4. The apparatus of claim 1, wherein the update information for the data broadcasting includes information on a main channel, a sub channel, an ensemble channel, data content, and an update period.

5. The apparatus of claim 1, further comprising an audio/video (A/V) broadcasting signal decoder that decodes the A/V broadcasting signal.

6. A method of automatically updating data broadcasting while audio/video (A/V) broadcasting is being watched through a broadcasting terminal, the method comprising:
comparing a predetermined update period of the data broadcasting with an elapsed time;
processing a predetermined data broadcasting signal if the elapsed time is greater than the update period; and
providing data broadcasting to a user by using the processed data broadcasting signal.

7. The method of claim 6, wherein the processing of the predetermined data broadcasting signal comprises:
filtering and separating only signals of main/sub channels that include a predetermined data broadcasting signal from broadcasting signals;
separating only the predetermined data broadcasting signal from the signals of main/sub channels; and
decoding the separated data broadcasting signal.

8. The method of claim 7, further comprising, if a main/sub channel of audio/video (A/V) broadcasting currently being watched by the user is different from a predetermined main/sub channel, changing the main/sub channel of the A/V broadcasting into the predetermined main/sub channel.

9. The method of claim 6, further comprising:
informing the user that an update process for data broadcasting will be performed; and
canceling the update process for data broadcasting if the user indicates a desire not to perform the update process for data broadcasting.

10. The method of claim 6, further comprising:
informing the user that an update process for data broadcasting will be performed; and
delaying the update process for data broadcasting if the user indicates a desire to delay the update process for data broadcasting for a predetermined time.

11. The method of claim 6, further comprising the user predetermining update information for the data broadcasting.

12. The method of claim 6, wherein the data broadcasting signal includes one or more data content comprising traffic condition information, traffic accident information, destination information, weather information, financial information, and sports information.

13. The method of claim 6, wherein, in the providing of the data broadcasting to the user, only the data broadcasting is output.

14. The method of claim 6, wherein, in the providing of the data broadcasting to the user, the data broadcasting is output together with the audio/video (A/V) broadcasting currently being watched.

15. The method of claim 14, further comprising, if a main/sub channel of AN broadcasting currently being watched by a user is different from a predetermined main/sub channel, downloading and storing a broadcasting signal of the predetermined main/sub channel.

16. A method of automatically updating data broadcasting while audio/video (A/V) broadcasting is being watched through a broadcasting terminal, the method comprising:
comparing a predetermined update period of the data broadcasting with an elapsed time;
if the time is greater than the update period, and if a main/sub channel of A/V broadcasting currently being watched by a user is different from a predetermined main/sub channel, changing the main/sub channel of A/V broadcasting into the predetermined main/sub channel;
processing a predetermined data broadcasting signal of the predetermined main/sub channel; and
providing the data broadcasting to the user by using the processed data broadcasting signal.

17. A computer-readable medium having embodied thereon a computer program for executing a method of automatically updating data broadcasting while audio/video (AN) broadcasting is being watched through a broadcasting terminal, the method comprising:
comparing a predetermined update period of the data broadcasting with an elapsed time;
processing a predetermined data broadcasting signal if the elapsed time is greater than the update period; and
providing the data broadcasting to a user by using the processed data broadcasting signal.

18. A method of providing broadcasting signals to the user from a plurality of main/sub channels, using digital multi-broadcasting (DMB), comprising:
displaying audio/video (A/V) broadcasting of a first main/sub channel; and
automatically providing on a periodic basis, data broadcasting of a second main/sub channel.

19. The method of claim 18, wherein the automatically providing of the data broadcasting comprises:
storing the data broadcasting in a storage unit;
matching the data broadcasting stored on the storage unit to a selection by a user, via a user interface; and
displaying on an output unit, the data broadcasting stored in the storage unit that matches the selection.

20. The method of claim 19, wherein the displaying of the data broadcasting comprises:
superimposing the matched data broadcasting on the audio/video (A/V) broadcasting currently being watched by the user.

21. The method of claim 19, further comprising:
replacing the display of the audio/video (AN) broadcasting with the matched data broadcasting.

22. The method of claim 18, wherein the automatically providing of the data broadcasting comprises:
outputting audio content of the data broadcasting.
